# EUROPEAN PATENT SPECIFICATION

(11) **EP 1 188 586 B1**
(45) Date of publication and mention of the grant of the patent: **05.11.2008**
(21) Application number: 01119330.7
(22) Date of filing: 10.08.2001
(51) Int. Cl.: B60G 15/06

(54) **Mount insulator**
Isolatorhalterung
Support d'isolateur

(30) Priority: 18.09.2000 JP 2000281160
(43) Date of publication of application: 20.03.2002
(73) Proprietor: NISSAN MOTOR CO., LTD., Yokohama-shi Kanagawa-ken (JP)
(72) Inventor: Tanaka, Kouichi, Inagi-shi, Kanagawa-ken (JP)
(74) Representative: Weber, Joachim

(56) References cited:
- PATENT ABSTRACTS OF JAPAN vol. 2000, no. 01, 31 January 2000 (2000-01-31) & JP 11 270606 A (NISSAN MOTOR CO LTD), 5 October 1999 (1999-10-05)
- PATENT ABSTRACTS OF JAPAN vol. 0152, no. 49 (M-1128), 25 June 1991 (1991-06-25) & JP 3 079822 A (NISSAN MOTOR CO LTD), 4 April 1991 (1991-04-04)

## Description

### BACKGROUND OF THE INVENTION

The present invention relates to a mount insulator and, more particularly, to a mount insulator specifically for use in a suspension member of a chassis of an automotive vehicle.

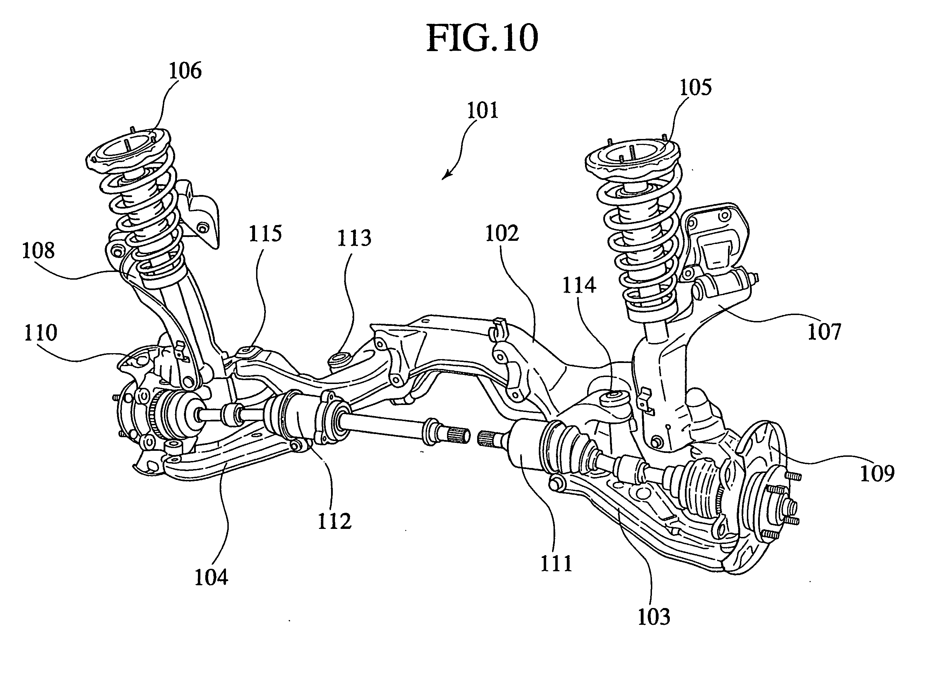

Fig. 10 shows an example of a front suspension of an automotive vehicle. The front suspension, which is designated at 101, includes a suspension member 102, transverse links 103 and 104 which extend outward from respective end portions of the suspension member 102 in longitudinal directions thereof, shock absorber assemblies 105 and 106, vertical links 107 and 108 which extend vertically upward, hub assemblies 109 and 110, and drive shafts 111 and 112, and is mounted to a chassis (not shown) at rear mounts 113 (of which only one is shown in FIG. 10) and front mounts 114 and 115 located on the suspension member 102 through mount insulators which will be described below. JP 11270606A discloses a mount insultator.

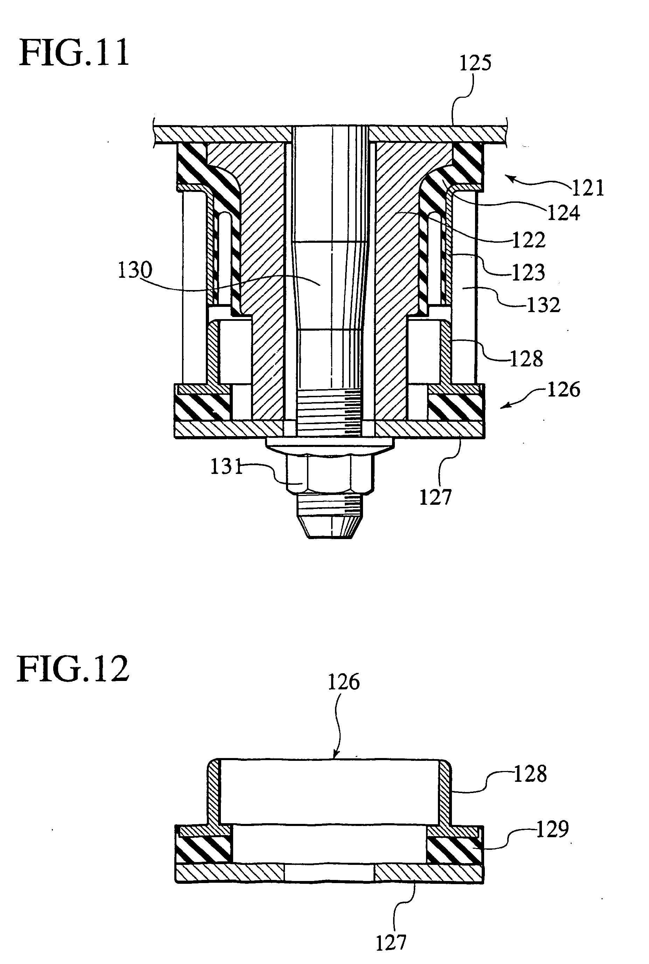

FIG. 11 shows an example of a mount insulator employed in a related art practice. In FIG. 11, the mount insulator 121 is located between a chassis 125 and a collar 132 which form a part of the suspension member 102 and has an inner cylinder 122, an outer cylinder 123, a resilient body 124 located between the inner and outer cylinders 122 and 123, and a stopper 126 which restricts rocking movement of the collar (first cylindrical member) 132 of the suspension member 102. As clearly seen in FIG. 12, the stopper 126 includes an annular plate 127, a cylindrical member (a second cylindrical member) 128 and a resilient body 129 located between the annular plate 127 and the cylindrical member 128, with the annular plate 127 being normally made of metal while the cylindrical member 128 is made of resin. Also, the resilient bodies 124 and 129 are usually made of rubber, with the resilient bodies 124 and 129 being attached to the inner cylinder 122, the outer cylinder 123, the annular plate 127 and the cylindrical member 128, respectively, by means of adhesive. In such a structure, the mount insulator 121 is fixed in place by press fitting the outer cylinder 123 into the collar 132, whereas the stopper 127 is also fixed in place by press fitting the second cylindrical member 128 of the stopper 127 into the collar 132.

During assembling the suspension member 102 to the chassis, the inner cylinder 122 and the stopper 126 are inserted through a bolt 130 welded to and extending from the chassis 125 and a nut 131 is then screwed into the bolt 130 to complete the assembling step. Thus, the suspension member 102 is resiliently supported on the chassis 125 through the mount insulator 121.

Here, because the resilient bodies 124 and 129 serve as spring elements and damping elements, the resilient body 129 of the stopper 126 is designed in a profile which is exerted with a load in a vertical direction, i.e., a compressive load along a central axial of the mount insulator 1 and with a load in lateral, forward and aft (backward) or leftward and rightward directions, i.e., a shearing load in a radial direction (i.e., in a direction perpendicular to the central axis). For this reason, the whole of the resilient bodies 124 and 129 may be preferably enabled to have a spring constant, in lateral, forward and aft (backward) or leftward and rightward directions, which is equal to or lower than that in vertical, upward or downward directions, for thereby ensuring driving stability and to be comfortable in the automotive vehicle during its driving state while insulating the vibrations to be transmitted to the chassis 105 from the suspension member 102 and maintaining the noises in the passenger compartment at a suitable level.

### SUMMARY OF THE INVENTION

However in the mount insulator 121 shown in FIG. 11, when manually press fitting and fixing the cylindrical member 128 of the stopper 126 to the collar 132, it is required for the outer circumferential periphery of the cylindrical member 128 and the inner circumferential periphery of the collar 132 to be precisely machined with a great precision for thereby increasing the manufacturing cost. To avoid such a situation, it may be a practice to mechanically press fit the cylindrical member 128 of the stopper 126 into the collar 132 prior to assembling the suspension member 102 to the chassis 125, with a resultant increase in the number of the manufacturing steps.

Also, since when the stopper 126 is fixed with the nut 131, the annular plate 127 is rotated with a fastening torque of the nut 131 but contrary the cylindrical member 128 is press fitted to the collar 132, the resilient body 129 encounters a force in a twisted direction and thus is deformed. For this reason, it is hard for an actual automotive vehicle to have a characteristic related to a desired spring constant and dumping constant in the mount insulator 121.

The present invention is achieved in view of the above studies of the present inventor, and it is therefore an object of the present invention to provide a mount insulator which is able to reduce the number of press fitting works in machines during the assembling process, and also which is able to obtain a desired insulating characteristic in a stable manner, without sacrificing a driving stability and a noise/vibration performance in a passenger compartment.

According to one aspect of the present invention, there is provided a mount insulator is provided with: a first cylindrical member provided at one of a supporting member and a member to be supported; an inner cylinder internally located in the first cylindrical member in a substantially concentric relation thereto and fixedly secured to the other of the supporting member and the member to be supported; a plate held in abutting engagement with a distal end of the inner cylinder and having a coupling bore an axis of which is substantially concentric to the inner cylinder; a second cylindrical member fitted to the first cylindrical member in a substantially concentric relation thereto; a first resilient body located between the inner cylinder and the first cylindrical member; a second resilient body located between the plate and the second cylindrical member; and a third resilient body located between the first cylindrical member and the second cylindrical member.

Other and further features, advantages, and benefits of the present invention will become more apparent from the following description taken in conjunction with the following drawings.

### BRIEF DESCRIPTION OF THE DRAWINGS

FIG. 1 is a cross sectional view of a first embodiment of a mount insulator according to the present invention;
FIG. 2 is a cross sectional view of a stopper of the mount insulator shown in FIG. 1;
FIG. 3 is a cross sectional view of a second embodiment of a mount insulator according to the present invention;
FIG. 4 is a cross sectional view of a stopper of the mount insulator shown in FIG. 3;
FIG. 5A is a plan view of a stopper of a third embodiment according to the present invention;
FIG. 5B is a cross sectional view of the stopper shown in FIG. 5A;
FIG. 6A is a plan view of a stopper of a fourth embodiment according to the present invention;
FIG. 6B is a cross sectional view of the stopper shown in FIG. 6A;
FIG. 7A is a plan view of a stopper of a fifth embodiment according to the present invention;
FIG. 7B is a cross sectional view of the stopper shown in FIG. 7A;
FIG. 8A is a plan view of a stopper of a sixth embodiment according to the present invention;
FIG. 8B is a cross sectional view of the stopper shown in FIG. 8A;
FIG. 9A is a plan view of a stopper of a seventh embodiment according to the present invention;
FIG. 9B is a cross sectional view of the stopper shown in FIG. 9A;
FIG. 10 is a perspective view illustrating an example of a front suspension of an automotive vehicle; and
FIG. 11 is a cross sectional view of a mount insulator of a related art; and
FIG. 12 is a cross sectional view of a stopper shown in FIG. 11.

### DETAILED DESCRIPTION OF THE EMBODIMENTS

To describe the present invention more in detail, several embodiments of the present invention will be explained with reference to the accompanied drawings below.

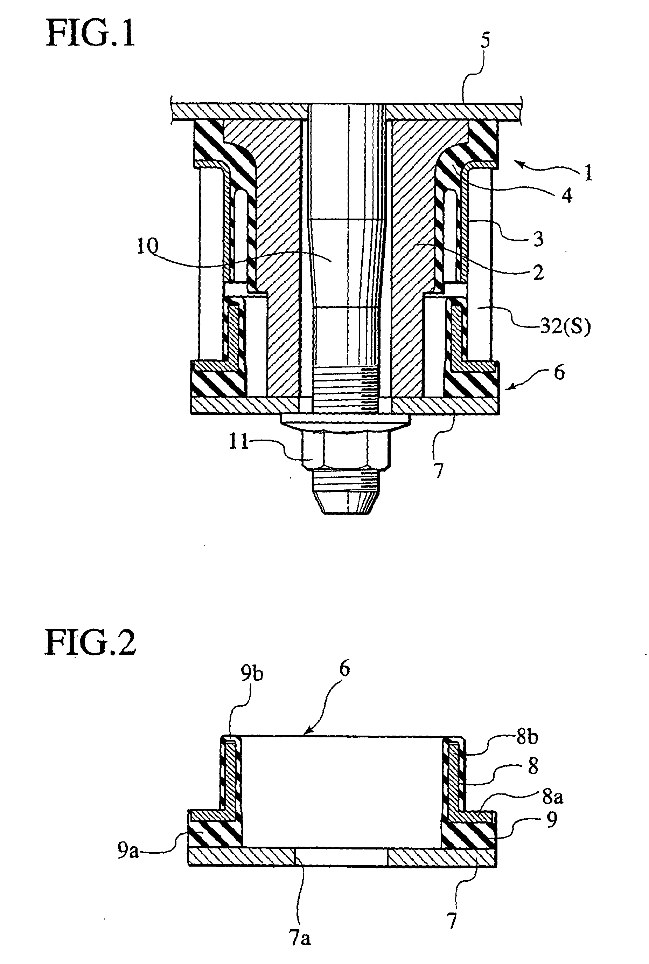

FIGS. 1 and 2 show a first embodiment of a mount insulator according to the present invention, with FIGS. 1 and 2 showing a whole structure of the mount insulator and only a stopper, respectively, in cross section.

As shown in FIG. 1, a stopper 6 connects with a collar 32 which forms a part of a suspension member S. Incidentally, a numeral 5 designates a chassis.

The mount insulator 1 is provided with an inner cylinder 2, an outer cylinder 3, a resilient body 4 located between the inner and outer cylinders 2 and 3, and a stopper 6 located at a bottom wall of the mount insulator 1 for restricting the rocking movement of the collar (first cylindrical member) 32. The inner and outer cylinders 2 and 3, the resilient body 4, the collar 32 and the stopper 6 are arranged in a concentric relationship with respect to one another.

As clearly seen in FIG. 1, the stopper 6 includes an annular plate 7 formed with a coupling bore 7a which is aligned in a substantially concentric relationship with the inner cylinder 2, a cylinder (a second cylindrical member) 8, and a resilient body 9 located between the cylinder 8 and the annular plate 7. The annular plate 7, the cylinder 8 and the resilient body 9 are arranged in the concentric relationship with respect to one another. Normally, the annular plate 7 is made of metal, and the cylinder 8 is made of resin. Further, the resilient bodies 4 and 9 are normally made of rubber. The resilient body 4 is usually attached between the inner and outer cylinders 2 and 3, and the resilient body 9 is usually attached between the annular plate 7 and the cylinder 8, respectively, by means of an adhesive. The mount insulator 1 is assembled such that the outer cylinder 3 is press fitted in a downward direction to the collar 32, which is a part of the suspension member, and is fixedly retained thereby, together with the stopper 6 being also press fitted in an upward direction to the collar 32 to be fixedly retained thereby.

As shown in FIG. 2, the resilient body 9 incorporated in the stopper 6 is arranged to lie between the annular plate 7 and an annular bottom flange 8a of the cylinder 8 by an annular flange portion 9a, with an equal thickness throughout a circumferential periphery of the resilient body 9, and also to conceal the whole surface area of a cylindrical portion 8b of the cylinder 8 by a cylindrical wall portion 9b. This causes the resilient body 9 to lie between the cylinder 8 and the collar 32. As a consequence, the cylinder 8 is enabled to be manually press fitted to the collar 32 without processing and finishing an outer circumferential periphery of the cylindrical portion 8b of the cylinder 8 and an inner periphery of the collar 32 with a high precision. Also, the resilient body 9 is preferable to be unitarily formed to have the annular flange portion 9a, which is sandwiched between the annular plate 7 and the annular bottom flange 8a, and the cylindrical wall portion 9b which conceals the cylindrical portion 8b of the cylinder 8, respectively. The cylindrical wall portion 9b is preferably adhered to the annular flange portion 9a by an adhesive. This results in a reduction in the number of manufacturing steps of the stopper 6. In this event, the cylinder 8 and the annular plate 7 are coated with the adhesive and are then set in a forming mold for the resilient body 9 to allow the resilient body 9 to be suitably formed in a vulcanization by means of an injection molding.

During assembly of the suspension member to the chassis 5 of the vehicle body, the inner cylinder 2 and the stopper 6 are located so as to pass a bolt 10, which is fixed to the chassis 5 by welding, to which a nut 11 is screwed to complete an assembling step. In such an assembling step, the stopper 6 may be preliminarily and manually press fitted to the collar 32 or may be manually press fitted to the collar 32 after passing the bolt 10 through the inner cylinder 2. Also, since the collar 32 and the cylindrical wall portion 9b can be manually rotated relative to one another, the nut 11 can be screwed to the bolt 10 with a coupling torque without any deformation generated in the resilient body 9a, enabling to provide a stable insulating characteristic of the mount insulator 1. In such a manner, the suspension member can be resiliently supported with the chassis 5 through the mount insulator 1.

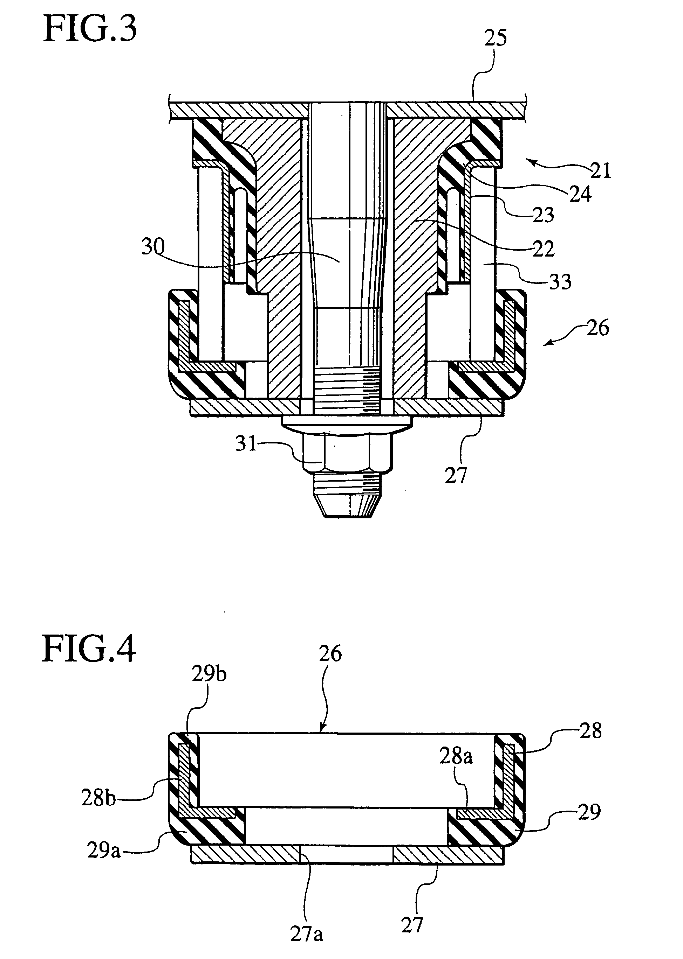

FIGS. 3 and 4 show a mount insulator of a second embodiment of the present invention, with FIG. 3 illustrating a whole structure, in cross section, of the mount insulator and FIG. 4 illustrating only a stopper.

As shown in FIG. 3, the mount insulator 21 is provided with an inner cylinder 22, an outer cylinder 23, a resilient body 24 located between the inner and outer cylinders 22 and 23, and a stopper 26 located at a bottom wall of the mount insulator 21 for restricting the rocking movement of a collar (first cylindrical member) 33 which forms a part of a suspension member (now shown). The inner and outer cylinders 22 and 23, the resilient body 24, the collar 33 and the stopper 26 are arranged in a concentric relationship with respect to one another.

As clearly seen in FIG. 3, the stopper 26 includes an annular plate 27 formed with a coupling bore 27a, a cylinder (a second cylindrical member) 28, and a resilient body 29 located between the cylinder 28 and the annular plate 27, with the annular plate 27, the cylinder 28 and the resilient body 29 being arranged in the concentric relationship with respect to one another. Also, the mount insulator 21 is so arranged that an inner peripheral wall of the cylinder 28 of the stopper 26 mates with an outer periphery of the collar 33.

As shown in FIG. 4, the resilient body 29 installed in the stopper 26 is arranged to lie between the annular plate 27 and an annular bottom flange 28a of the cylinder 28 by an annular flange portion 29a, with an equal thickness throughout a circumferential periphery of the resilient body 29, and also to conceal the whole surface area of a cylindrical portion 28b of the cylinder 28 by a cylindrical wall portion 29b. Also, the resilient body 29 is preferable to be unitarily formed to have the annular flange portion 29a, which is sandwiched between the annular plate 27 and the annular bottom flange 28a, and the cylindrical wall portion 29b which conceals the cylindrical portion 28b of the cylinder 28.

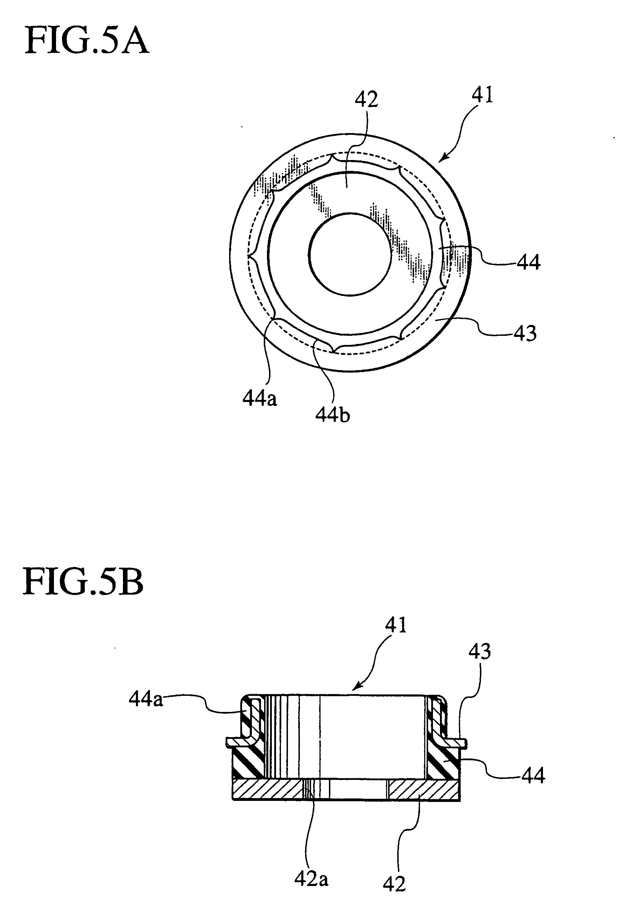

FIGS. 5A and 5B show a stopper of a mount insulator of a third embodiment of the present invention, with FIG. 5A being a plan view of the stopper and FIG. 5B being a cross sectional view of the stopper.

Although the stopper 41 is constructed of an annular plate 42 formed with a coupling bore 42a, a cylinder (a second cylindrical member) 43 and a resilient body 44, which is sandwiched between the annular plate 42 and the cylinder 43 and which conceals the cylinder 43 and the annular plate 42, like in the first and second embodiments, the stopper 41 further features the provision of a plurality of protrusions 44a circumferentially formed in an outer periphery of the cylinder 43 at its cylindrical portion to conceal the cylinder 43. Incidentally, a plurality of recessed portions 44b are alternately formed with respect to the plural protrusions 44a.

With such a configuration, it is possible to decrease the force to be exerted to the stopper 41 during press fitting operation. Thus, the press fitting operation can be beneficially performed in a manually handling step. Further, the presence of the plural protrusions 44a, which has a height (corresponding to a radial thickness) slightly greater than an inner diameter of the collar (the first cylindrical member: not shown), allows their depressed portions to escape to areas adjacent to the respective protrusions 44a, thereby maintaining a tight contact between the inner periphery of the collar and the stopper 41. In order to precisely align a central axis of the stopper 41 to a central axis of the collar, the plural protrusions 44a may be preferably located on the resilient body 44 in a symmetric relation with respect to the central axis of the stopper 41.

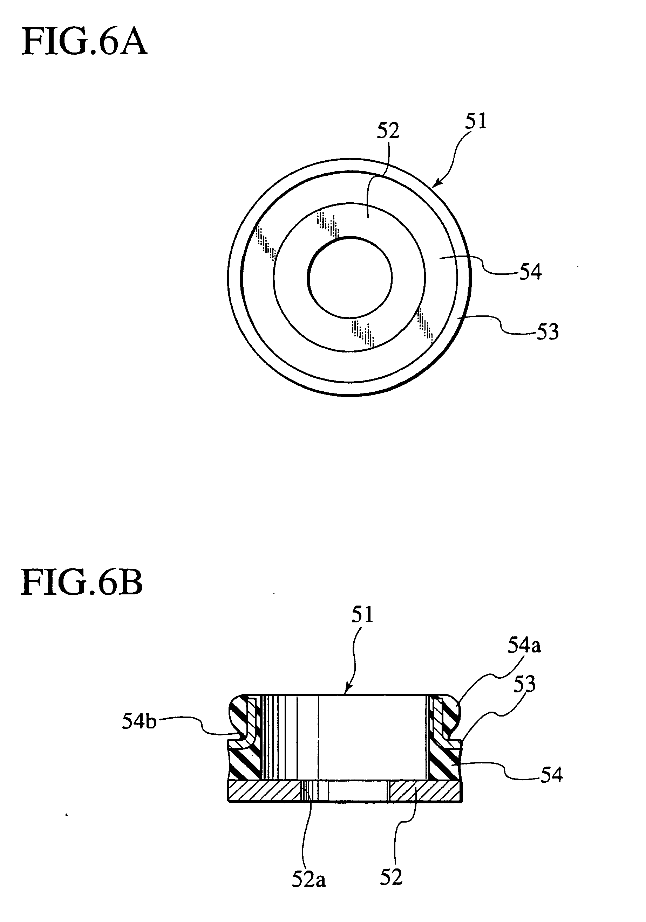

FIGS. 6A and 6B show a stopper of a mount insulator of a fourth embodiment of the present invention, with FIG. 6A being a plan view of the stopper and FIG. 6B being a cross sectional view of the stopper.

Although the stopper 51 is constructed of an annular plate 52 formed with a coupling bore 52a, a cylinder (a second cylindrical member) 53 and a resilient body 54, which is sandwiched between the annular plate 52 and the cylinder 53 and which conceals the cylinder 53 and the annular plate 52, like the stoppers in the respective embodiments, the stopper 51 further features the provision of an expanded ridge portion 54a circumferentially extended to have an increased thickness in its radial direction and a recessed portion 54b adjacently formed at a bottom portion of the circumferential extended ridge portion 54a.

With such a configuration, even when the expanded ridge portion 54a is depressed during the press fitting operation, a depressed portion of the ridge portion 54a escapes into the recessed portion 54b, thereby maintaining a tight contact between the an inner periphery of the collar (first cylindrical member: not shown) and the outer periphery of the stopper 51.

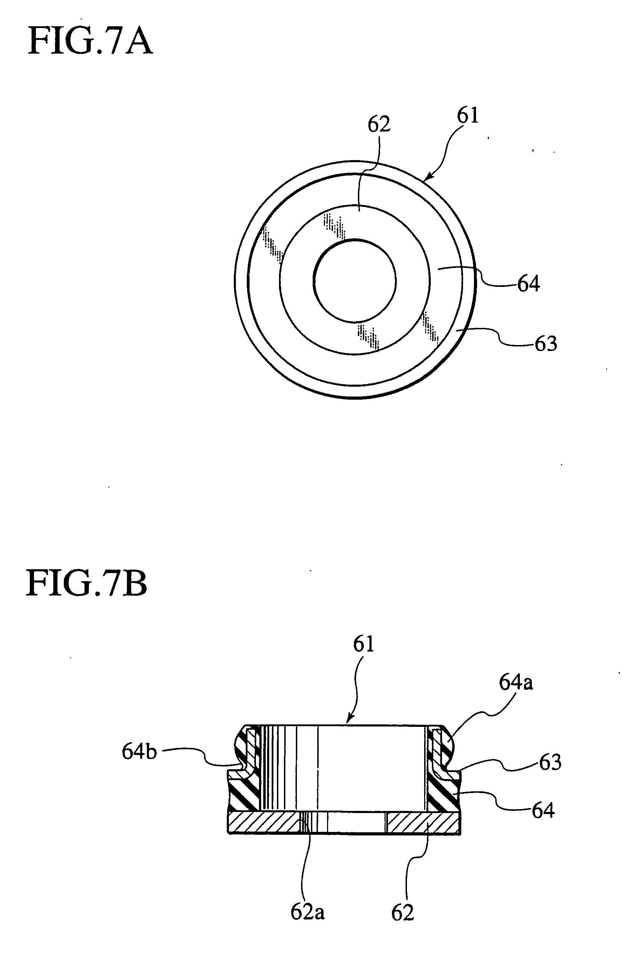

FIGS. 7A and 7B show a stopper of a mount insulator of a fifth embodiment of the present invention, with FIG. 7A being a plan view of the stopper and FIG. 7B being a cross sectional view of the stopper.

Although the stopper 61 has a similar structure as that of the embodiment shown in FIGS. 6A and 6B and includes a plate 62 formed with a coupling bore 62a, a cylinder 63 and a resilient body 64, the stopper 61 is different from the stopper 51 shown in FIGS. 6A and 6B in that a maximum thickness point of an expanded ridge portion 64a is dislocated from that of the stopper 51. Incidentally, a recessed portion 64b is adjacently formed at a bottom portion of the circumferential extended ridge portion 64a.

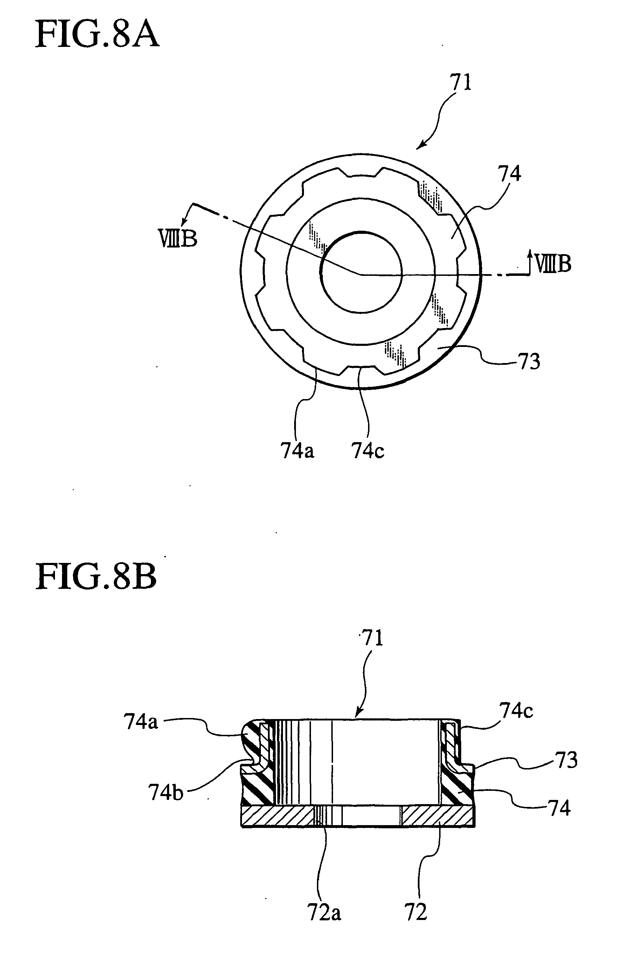

FIGS. 8A and 8B show a stopper of a mount insulator of a sixth embodiment of the present invention, with FIG. 8A being a plan view of the stopper and FIG. 8B being a cross sectional view of the stopper taken on a line VIII B-VIII B of FIG. 8A.

In the stopper 71 shown in FIGS. 8A and 8B, a plate 72 is formed with a coupling bore 72a, and a circumferential periphery of a resilient body 74, which conceals a cylinder (a second cylindrical member) 73 and the plate 72, has a plurality of circumferentially, equally spaced trapezoid-shaped protrusions 74a and a plurality of recessed portions 74c which are alternately formed with respect to the protrusions 74a. Each of the protrusions 74a has a substantially similar cross section as shown in FIG. 8B, like the expanded ridge portion 54a of the stopper 51 shown in FIGS. 6A and 6B. Incidentally, a recessed portion 74b is adjacently formed at a bottom portion of each of the protrusions 74a to circumferentially exist.

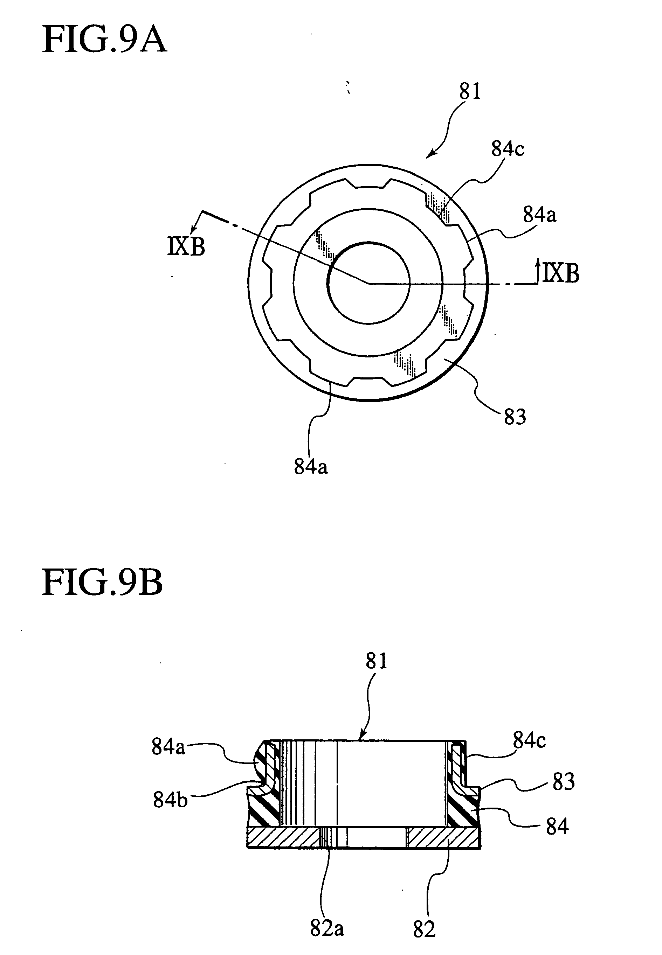

FIGS. 9A and 9B show a stopper of a mount insulator of a seventh embodiment of the present invention, with FIG. 9A being a plan view of the stopper and FIG. 9B being a cross sectional view of the stopper taken on a line IX B- IX B of FIG. 9A.

In the stopper 81 shown in FIGS. 9A and 9B, a plate 82 is formed with a coupling bore 82a, and a circumferential periphery of a resilient body 84, which conceals a cylindrical member (a second cylindrical member) 83 and the plate 82, has a plurality of circumferentially, equally spaced trapezoid-shaped protrusions 84a and a plurality of recessed portions 84c which are alternately formed with respect to the protrusions 84a. Each of the projections 84a has a substantially similar cross section as shown in FIG. 9B, like the expanded portion 64a of the stopper 61 shown in FIGS. 7A and 7B. Incidentally, a recessed portion 84b is adjacently formed at a bottom portion of each of the protrusions 84a to circumferentially exist.

It will now be understood from the foregoing description that in accordance with the mount insulator according to the present invention, it is possible for manually performing press fitting operation of the component parts without implementing a precise machining thereon. This results in a decrease in the number of manufacturing steps and a reduction in manufacturing cost. Also, it is possible for the mount insulator of the present invention to have a desired stable insulating characteristic.

More specifically, the presence of the third resilient body formed in the stopper allows the second cylindrical member to be fixed to the first cylindrical member with a resilient effect, thereby rendering the stopper to be manually press fitted to the first cylindrical member without the need for machining both the outer periphery of the second cylindrical member of the stopper and the inner periphery of the first cylindrical member with a great precision. Thus, it is possible to reduce the number of manufacturing steps and the manufacturing costs.

Since the first and second cylindrical members are rotatable with respect to one another, it is possible for the second resilient body lying between the plate and the second cylindrical member not to encounter a twisting deformation, with a resultant desired insulating characteristic in a stable manner.

The presence of the circumferentially spaced protrusions and recessed portions alternately formed with one another on the outer periphery of the third resilient body lying between the first and second cylindrical members allows the second cylindrical member to be press fitted to the first cylindrical member with a relatively low press fitting force, providing an ease of press fitting operation in a manual practice.

Since the protrusions and recessed portions are alternately formed on the outer periphery of the third resilient body in an equally spaced relationship and in a symmetric relationship with respect of one another allows the central axis of the plate, the second cylindrical member and the second resilient body to be precisely aligned the central axis of the first cylindrical member in an improved assembling precision.

The presence of the third resilient body formed with the circumferentially extended ridge portion and the recessed portion which are adjacently located thereto in the axial direction of the mount insulator allows the second cylindrical member to be press fitted to the first cylindrical member with a relatively low press fitting force, providing an ease of press fitting in a manual practice.

The presence of the third resilient body formed integral with the second resilient body allows the formation of the second and third resilient bodies to be implemented at one forming step, with a resultant decrease in the manufacturing steps as well as the manufacturing cost. Also, during press fitting the second cylindrical member to the first cylindrical member, the second resilient body is hard to be twisted, with a resultant improvement over the workability in the manual press fitting operation.

The presence of the third resilient body adhered to the second resilient body allows the second cylindrical body to be press fitted to the first cylindrical member without causing the second resilient body to be twisted, with a resultant improvement over the workability in the manual press fitting operation.

Although the invention has been described above by reference to certain embodiments of the invention, the invention is not limited to the embodiments described above. Modifications and variations of the embodiments described above will occur to those skilled in the art, in light of the teachings. The scope of the invention is defined with reference to the following claims.

## Claims

1. A mount insulator comprising:
a first cylindrical member (32, 33) provided at one of a supporting member (5, 25) and a member (S) to be supported;
an inner cylinder (2, 22) internally located in the first cylindrical member in a substantially concentric relation thereto and fixedly secured to the other of the supporting member and the member to be supported;
a plate (7, 27, 42, 52, 62, 72, 82) held in abutting engagement with a distal end of the inner cylinder and having a coupling bore(7a, 27a, 42a, 52a, 62a, 72a, 82a) an axis of which is substantially concentric to the inner cylinder;
a second cylindrical member (8, 28, 43, 53, 63, 73, 83) fitted to the first cylindrical member in a substantially concentric relation thereto;
a first resilient body (4, 24) located between the inner cylinder and the first cylindrical member;
a second resilient body (9, 29, 44, 54, 64, 74, 84) located between the plate and the second cylindrical member; and **characterised by**
a third resilient body (9b, 29b) located between the first cylindrical member and the second cylindrical member.

2. A mount insulator according to claim 1, wherein the third resilient body (9b, 29b) includes:
a plurality of circumferentially spaced protrusions (44a, 74a, 84a) formed at an outer circumferential periphery of the third resilient body opposing to the first cylindrical member; and
a plurality of recessed portions (44b, 74b, 84b) each of which has a radially thinned thickness relative to the protrusions and which are alternately formed with respect to the protrusions.

3. A mount insulator according to claim 2, wherein the protrusions (44a, 74a, 84a) are equally spaced from one another in a circumferential direction in symmetric relation with a central axis of the second cylindrical member.

4. A mount insulator according to claim 1, wherein the third resilient body (9b, 29b) includes:
a radially expanded portion (54a, 64a, 74a, 84a) formed throughout an outer circumferential periphery of the third resilient body opposing to the first cylindrical member; and
a recessed portion (54b, 64b, 74b, 84b) having a radially thinned thickness relative to the expanded portion and adjacently formed to the expanded portion in a direction of a central axis of the mount insulator.

5. A mount insulator according to claim 4, wherein the expanded portion is divided to from a plurality of protrusions (74a, 84a).

6. A mount insulator according to any of claims 1 to 5, wherein the second resilient body (9, 29, 44, 54, 64, 74, 84) and the third resilient body (9b, 29b) are unitarily formed with one another.

7. A mount insulator according to any of claims 1 to 6, wherein the third resilient body (9b, 29b) is connected to the second cylindrical member (8, 28, 43, 53, 63, 73, 83) and the plate (7, 27, 42, 52, 62, 72, 82) by an adhesive.

8. A mount insulator according to any of claims 1 to 7, wherein the second cylindrical member (8, 43, 53, 63, 73, 83) is press fitted to an inner wall of the first cylindrical member (32) through the third resilient body (9b).

9. A mount insulator according to any of claims 1 to 8, wherein the second cylindrical member (28) is press fitted to an outer wall of the first cylindrical member (33) through the third resilient body (29b).

10. A mount insulator according to any of claims 1 to 9, wherein the supporting member (5, 25) is resiliently supported with the member (S) through the first resilient body (4, 24) and the second resilient body (9, 29, 44, 54, 64, 74, 84).

## Patentansprüche

1. Isolatorhalterung, umfassend:
ein erstes zylindrisches Element (32, 33), das an einem Stützelement (5, 25) oder einem zu stützenden Element (S) vorgesehen ist;
einen Innenzylinder (2, 22), der innen in dem ersten zylindrischen Element in einer im Wesentlichen konzentrischen Relation zu diesem angeordnet und fest an dem anderen des Stützelements oder des zu stützenden Elements befestigt ist,
eine Platte (7, 27, 42, 52, 62, 72, 82), die in anliegenden Eingriff mit einem distalen Ende des Innenzylinders gehalten wird und ein Verbindungsbohrloch (7a, 27a, 42a, 52a, 62a, 72a, 82a) aufweist, dessen eine Achse im Wesentlichen konzentrisch zu dem Innenzylinder ist;
ein zweites zylindrisches Element (8, 28, 43, 53, 63, 73, 83), das am ersten zylindrischen Element in einer im Wesentlichen konzentrischen Relation zu diesem eingepasst ist;
einen ersten elastischen Körper (4, 24), der zwischen dem Innenzylinder und dem ersten zylindrischen Element angeordnet ist;
einen zweiten elastischen Körper (9, 29, 44, 54, 64, 74, 84), der zwischen der Platte und dem zweiten zylindrischen Element angeordnet ist; und
**gekennzeichnet durch**:
einen dritten elastischen Körper (9b, 29b), der zwischen dem ersten zylindrischen Element und dem zweiten zylindrischen Element angeordnet ist.

2. Isolatorhalterung nach Anspruch 1, wobei der dritte elastische Körper (9b, 29b) umfasst:
eine Vielzahl von im Umfangsrichtung beabstandeten Vorsprüngen (44a, 74a, 84a), die an einem Außenumfang des dritten elastischen Körpers gegenüber dem ersten zylindrischen Element ausgebildet sind; und
eine Vielzahl von vertieften Bereichen (44b, 74b, 84b), von denen jeder eine radial verringerte Dicke in Bezug auf die Vorsprünge aufweist, und die in Bezug auf die Vorsprünge abwechselnd ausgebildet sind.

3. Isolatorhalterung nach Anspruch 2, wobei die Vorsprünge (44a, 74a, 84a) in einer Umfangsrichtung in symmetrischer Relation zu einer Mittelachse des zweiten zylindrischen Elements gleichmäßig voneinander beabstandet sind.

4. Isolatorhalterung nach Anspruch 1, wobei der dritte elastische Körper (9b, 29b) umfasst:
einen radial erweiterten Bereich (54a, 64a, 74a, 84a), der über einen gesamten Außenumfang des dritten elastischen Körpers gegenüber dem ersten zylindrischen Element ausgebildet ist; und
einen vertieften Bereich (54b, 64b, 74b, 84b), der eine radial verringerte Dicke in Bezug auf den erweiterten Bereich aufweist und angrenzend an den erweiterten Bereich in einer Richtung einer Mittelachse der lsolatorhalterung ausgebildet ist.

5. Isolatorhalterung nach Anspruch 4, wobei der erweiterte Bereich von einer Vielzahl von Vorsprüngen (74a, 84a) unterteilt wird.

6. Isolatorhalterung nach einem der Ansprüche 1 bis 5, wobei der zweite elastische Körper (9, 29, 44, 54, 64, 74, 84) und der dritte elastische Körper (9b, 29b) einheitlich miteinander ausgebildet sind.

7. lsolatorhalterung nach einem der Ansprüche 1 bis 6, wobei der dritte elastische Körper (9b, 29b) durch einen Klebstoff mit dem zweiten zylindrischen Element (8, 28, 43, 53, 63, 73, 83) und der Platte (7, 27, 42, 52, 62, 72, 82) verbunden ist.

8. Isolatorhalterung nach einem der Ansprüche 1 bis 7, wobei das zweite zylindrische Element (8, 43, 53, 63, 73, 83) durch den dritten elastischen Körper (9b) mittels Presspassung an einer Innenwand des ersten zylindrischen Elements (32) eingepasst ist.

9. Isolatorhalterung nach einem der Ansprüche 1 bis 8, wobei das zweite zylindrische Element (28) durch den dritten elastischen Körper (29b) mittels Presspassung an einer Außenwand des ersten zylindrischen Elements (33) eingepasst ist.

10. Isolatorhalterung nach einem der Ansprüche 1 bis 9, wobei das Stützelement (5, 25) durch den ersten elastischen Körper (4, 24) und den zweiten elastischen Körper (9, 29, 44, 54, 64, 74, 84) elastisch mit dem Element (S) abgestützt wird.

## Revendications

1. Support d'isolation comprenant :
un premier élément cylindrique (32, 33) prévu sur un parmi un élément de support (5, 25) et un élément (S) destiné à être supporté ;
un cylindre intérieur (2, 22) positionné intérieurement dans le premier élément cylindrique dans une relation sensiblement concentrique par rapport à celui-ci et fixé fermement à l'autre parmi l'élément de support et l'élément destiné à être supporté ;
une plaque (7, 27, 42, 52, 62, 72, 82) maintenue en prise contiguë avec une extrémité distale du cylindre intérieur et possédant un alésage de couplage (7a, 27a, 42a, 52a, 62a, 72a, 82a) dont un axe est sensiblement concentrique au cylindre intérieur ;
un second élément cylindrique (8, 28, 43, 53, 63, 73, 83) ajusté sur le premier élément cylindrique dans une relation sensiblement concentrique par rapport à celui-ci ;
un premier corps élastique (4, 24) positionné entre le cylindre intérieur et le premier élément cylindrique ;
un deuxième corps élastique (9, 29, 44, 54, 64, 74, 84) positionné entre la plaque et le second élément cylindrique ; et **caractérisé par**
un troisième corps élastique (9b, 29b) positionné entre le premier élément cylindrique et le second élément cylindrique.

2. Support d'isolation selon la revendication 1, dans lequel le troisième corps élastique (9b, 29b) comprend :
une pluralité de protubérances espacées de façon circonférentielle (44a, 74a, 84a) formées sur une périphérie circonférentielle extérieure du troisième corps élastique en face du premier élément cylindrique ; et
une pluralité de parties évidées (44b, 74b, 84b) dont chacune possède une épaisseur amincie de façon radiale par rapport aux protubérances et qui sont formées en alternance par rapport aux protubérances.

3. Support d'isolation selon la revendication 2, dans lequel les protubérances (44a, 74a, 84a) sont espacées de façon égale les unes des autres dans une direction circonférentielle dans une relation symétrique avec un axe central du second élément cylindrique.

4. Support d'isolation selon la revendication 1, dans lequel le troisième corps élastique (9b, 29b) comprend :
une partie agrandie de façon radiale (54a, 64a, 74a, 84a) formée sur une périphérie circonférentielle extérieure entière du troisième corps élastique en face du premier élément cylindrique ; et
une partie évidée (54b, 64b, 74b, 84b) possédant une épaisseur amincie de façon radiale par rapport à la partie agrandie et formée de façon adjacente à la partie agrandie dans une direction d'un axe central de l'isolateur de monture.

5. Support d'isolation selon la revendication 4, dans lequel la partie agrandie est divisée pour former une pluralité de protubérances (74a, 84a).

6. Support d'isolation selon l'une quelconque des revendications 1 à 5, dans lequel le deuxième corps élastique (9, 29, 44, 54, 64, 74, 84) et le troisième corps élastique (9b, 29b) sont formés de façon unitaire l'un avec l'autre.

7. Support d'isolation selon l'une quelconque des revendications 1 à 6, dans lequel le troisième corps élastique (9b, 29b) est relié au second élément cylindrique (8, 28, 43, 53, 63, 73, 83) et à la plaque (7, 27, 42, 52, 62, 72, 82) par un adhésif.

8. Support d'isolation selon l'une quelconque des revendications 1 à 7, dans lequel le second élément cylindrique (8, 43, 53, 63, 73, 83) est ajusté avec serrage sur une paroi intérieure du premier élément cylindrique (32) à travers le troisième corps élastique (9b).

9. Support d'isolation selon l'une quelconque des revendications 1 à 8, dans lequel le second élément cylindrique (28) est ajusté avec serrage sur une paroi extérieure du premier élément cylindrique (33) à travers le troisième corps élastique (29b).

10. Support d'isolation selon l'une quelconque des revendications 1 à 9, dans lequel l'élément de support (5, 25) est supporté de façon élastique avec l'élément (S) par l'intermédiaire du premier corps élastique (4, 24) et du deuxième corps élastique (9, 29, 44, 54, 64, 74, 84).
